# EUROPÄISCHE PATENTSCHRIFT

(11) **EP 3 970 345 B1**
(45) Veröffentlichungstag und Bekanntmachung des Hinweises auf die Patenterteilung: **27.11.2024**
(21) Anmeldenummer: 20722254.8
(22) Anmeldetag: 22.04.2020
(51) Int. Cl.: H04L 67/12, G05B 19/042

(54) **KONFIGURATIONSFREIE AUSGABE VON IN ETHERNET-TELEGRAMMEN ENTHALTENEN NUTZDATEN**
CONFIGURATION-FREE OUTPUT OF USER DATA CONTAINED IN ETHERNET TELEGRAMS
SORTIE SANS CONFIGURATION DE DONNÉES UTILES CONTENUES DANS DES TÉLÉGRAMMES ETHERNET

(30) Priorität: 16.05.2019 DE 102019112894
(43) Veröffentlichungstag der Anmeldung: 23.03.2022
(73) Patentinhaber: Endress+Hauser Process Solutions AG, 4153 Reinach (CH)
(72) Erfinder: BÜTTNER, Karl, 79395 Neuenburg (DE); WOLFF, Olivier, 4058 Basel (CH); ZWICK, Oliver, 87471 Durach (DE); ENGEL, Bastian, 79639 Grenzach (DE); MAIER, Stefan, 79618 Rheinfelden (DE); LOHMANN, Martin, 70839 Gerlingen (DE); BÜCKEL, Michael, 79541 Lörrach (DE); BRCIC, Mirko, 4310 Rheinfelden (CH)
(74) Vertreter: Trenkle, Dennis
(86) Internationale Anmeldenummer: PCT/EP2020/061191
(87) Internationale Veröffentlichungsnummer: WO 2020/229115

(56) Entgegenhaltungen:
- EP-A1- 3 056 953
- DE-A1- 102008 019 053
- DE-A1- 102008 043 683
- DE-A1- 102013 112 875
- DE-A1- 102013 218 566
- DE-A1- 102016 125 169
- US-A1- 2008 075 012

## Beschreibung

Die Erfindung betrifft eine Vorrichtung zur Extraktion von Nutzdaten aus von einem Feldgerät ausgesendeten Ethernet-Telegrammen. Des Weiteren umfasst die Erfindung ein System umfassend eine erfindungsgemäße Vorrichtung.

Aus dem Stand der Technik sind bereits Feldgeräte bekannt geworden, die in industriellen Anlagen zum Einsatz kommen. In der Automatisierungstechnik ebenso wie in der Fertigungsautomatisierung werden vielfach Feldgeräte eingesetzt. Als Feldgeräte werden im Prinzip alle Geräte bezeichnet, die prozessnah eingesetzt werden und die prozessrelevante Informationen liefern oder verarbeiten. Feldgeräte stellen eine Unterklasse des Begriffs "Sensorsysteme" dar. So werden Feldgeräte zur Erfassung und/oder Beeinflussung von Prozessgrößen verwendet. Zur Erfassung von Prozessgrößen dienen Sensorsysteme. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktorsysteme verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

DE 10 2013 112875 A1 offenbart ein Adaptersystem mit Feldgeräten.

Eine Vielzahl solcher Feldgeräte wird von der Endress+Hauser-Gruppe produziert und vertrieben.

Die von den Feldgeräten, insbesondere von Sensoren, erfassten Messwerte werden über das angeschlossene Bussystem an eine, oder gegebenenfalls auch an mehrere, übergeordnete Einheit(en) übermittelt. Die Datenübertragung von der übergeordneten Einheit über das Bussystem an die Feldgeräte dient insbesondere zur Konfigurierung und Parametrierung von Feldgeräten oder zu Diagnosezwecken. Allgemein gesprochen wird das Feldgerät über das Bussystem von der übergeordneten Einheit her bedient bzw. gesteuert. Die Energieversorgung der an einen Feldbus angeschlossenen Feldgeräte, in denen das entsprechende Bus-Protokoll implementiert ist, erfolgt gleichfalls über den jeweiligen Feldbus.

Nachteilig bei den in der Automatisierungstechnik bekannten Feldbussen sind deren verhältnismäßig geringe Übertragungsraten. Da die Feldgeräte in ihrer Funktionalität immer komplexer werden, führt dies insbesondere im Falle der Parametrierung und Konfigurierung aber auch im Falle der Übertragung von großen Mengen von Messdaten vom Feldgerät zur Steuereinheit zu langen Übertragungszeiten, was für den Kunden, sprich den Betreiber der Prozessanlage, natürlich nachteilig ist.

Daher ist es in der Automatisierungstechnik bekannt geworden, die Daten zwischen der Steuerebene und der Feldebene, bzw. vice versa, über eine Ethernet-Datenleitung zu übertragen. Hierbei erhalten die Feldgeräte, aber auch die übrigen Teilnehmer des Bussystems (Controller, Remote I/Os, etc.) eine direkte Ethernet-Anbindung.

Die von dem Feldgerät erfassten Prozessvariablen werden über die Ethernet-Datenleitung an die Leitstelle der Anlage übermittelt, wo diese verarbeitet werden. Es ist nicht vorgesehen, die erhobenen Prozessvariablen direkt im Feld einsehbar zu machen.

Ausgehend von dieser Problematik liegt der Erfindung die Aufgabe zugrunde, Nutzdaten eines Feldgeräts, welche per Ethernet-Telegrammen übertragen werden, bereits in der Feldebene einer Anlage einsehbar zu machen.

Die Aufgabe wird durch eine Vorrichtung gemäß Anspruch 1 und durch ein System gemäß Anspruch 7 gelöst.

Hinsichtlich der Vorrichtung ist eine Vorrichtung zur Extraktion von Nutzdaten aus von einem Feldgerät ausgesendeten Ethernet-Telegrammen vorgesehen, umfassend:
- Eine Eingangsschnittstelle und eine Ausgangschnittstelle zum Anschluss an eine Ethernet-Datenleitung, wobei die Eingangsschnittstelle ausgestaltet ist, über die Ethernet-Datenleitung übermittelte Ethernet-Telegramme zu empfangen;
- Eine Elektronikeinheit, welche dazu ausgestaltet ist, die empfangenen Ethernet-Telegramme auszuwerten und einen Wert zumindest einer Prozessvariable aus den Nutzdatenanteilen der empfangenen Ethernet-Telegramme zu extrahieren; und
- Eine Ausgabeeinheit zum Ausgeben der ermittelten Prozessvariablen.

Mittels der erfindungsgemäßen Vorrichtung ist ein Ausgeben von Nutzdaten von Feldgeräten in der Feldebene der Anlage ermöglicht. Bei den Nutzdaten handelt es sich erfindungsgemäß um Werte von Prozessvariablen, Messwertstatus und Diagnoseinformationen. Hierfür liest die Vorrichtung Ethernet-Telegramme mit, die über eine Ethernet-Datenleitung gesendet werden, und ermittelt die Werte der Prozessvariablen aus den Ethernet-Telegrammen. Die Vorrichtung muss im Ethernet-Netzwerk nicht bekanntgemacht, bzw. adressiert, werden und stellt dadurch eine Plugand-Play-Komponente dar.

Gemäß der erfindungsgemäßen Vorrichtung ist vorgesehen, dass die Vorrichtung weiter umfasst: Eine Speichereinheit, wobei die Speichereinheit eine Datenbank mit Gerätebeschreibungsdaten einer Vielzahl von Feldgerätetypen umfasst, wobei die Gerätebeschreibungsdaten Informationen zur Interpretation der Nutzdatenanteile der Feldgeräte umfassen, insbesondere den Datentyp und/oder die Nutzdatenlänge.

Gemäß der erfindungsgemäßen Vorrichtung ist vorgesehen, dass die Elektronikeinheit dazu ausgestaltet ist, die Struktur der zu ermittelnden Prozessvariablen aufgrund Gemeinsamkeiten des Nutzdatenanteils der Ethernet-Telegramme mit in Datenbank gespeicherten Informationen zur Interpretation der Nutzdatenanteile zu ermitteln. Verschiedene Feldgeräte nutzen mitunter verschiedene Formate des Wertes der Prozessvariablen in einem Ethernet-Telegramm, weswegen die Vorrichtung auf das entsprechende Feldgerät konfiguriert werden muss. Durch das Vorhalten der Gerätebeschreibungen verschiedener Geräte in der Speichereinheit ist es der Vorrichtung ermöglicht, selbstständig zu ermitteln, in welcher Form der Nutzdatenanteil in dem Telegramm vorliegt und wie dieser interpretiert werden kann. Es kann hierbei in der einfachsten Form vorgesehen sein, dass die Elektronikeinheit der Vorrichtung den Nutzdatenanteil des Ethernet-Telegramms tabellarisch mit den Einträgen in der Datenbank vergleicht und dadurch Informationen zur Interpretation des Nutzdatenanteils erhält. Eine komplexere Alternative sieht vor, dass die Elektronikeinheit einen KI ("Künstliche Intelligenz")-Algorithmus verwendet, welcher Gemeinsamkeiten des Nutzdatenanteils der Ethernet-Telegramme mit in Datenbank gespeicherten Informationen ermittelt, wodurch dadurch Informationen zur Interpretation des Nutzdatenanteils gewonnen werden.

Gemäß einer vorteilhaften Ausgestaltung der erfindungsgemäßen Vorrichtung ist vorgesehen, dass die Ausgabeeinheit eine Anzeigeeinheit ist, insbesondere ein Display, welches dazu ausgestaltet ist, die ermittelten Prozessvariablen anzuzeigen. Beispielsweise wird ein 7-Segment-Display verwendet.

Alternativ ist die Ausgabeeinheit eine weitere Schnittstelle, insbesondere eine Funkschnittstelle, über welche die Prozessvariable in einem zu dem verwendeten Ethernet-Protokoll verschiedenen Protokoll abrufbar ist, insbesondere von einer Bedieneinheit.

Gemäß einer vorteilhaften Weiterbildung der erfindungsgemäßen Vorrichtung ist vorgesehen, dass die Vorrichtung eine interne Verbindung der Eingangsschnittstelle mit der Ausgangsschnittstelle aufweist, wobei die interne Verbindung ausgestaltet ist, die an der Eingangsschnittstelle eingehenden Ethernet-Telegramme verlustfrei an die Ausgangsschnittstelle weiterzuleiten. Im einfachsten Fall handelt es sich hierbei um eine elektronische Verbindung, beispielweise eine Metalldrahtverbindung, bzw. eine Verbindung auf einer Leiterplatte. Die Ethernet-Datenleitung wird also um diese Verbindung erweitert, so dass das Ethernet-Telegramm zwischen der Eingangsschnittstelle und der Ausgangsschnittstelle passiv durch die Vorrichtung geleitet wird. Alternativ ist vorgesehen, dass die Vorrichtung das Ethernet-Telegramm "stoppt", also empfängt, ohne passiv weiterzuleiten, dann auswertet und selbst an den Empfänger aktiv neu übermittelt.

Gemäß einer vorteilhaften Ausgestaltung der erfindungsgemäßen Vorrichtung ist vorgesehen, dass die interne Verbindung einen mit der Elektronikeinheit verbundenen Abgriff aufweist. Über diesen Abgriff kann die Elektronikeinheit das Ethernet-Telegramm mitlesen, ohne das Ethernet-Telegramm selbst zu verändern oder den Datenverkehr auf der Ethernet-Datenleitung zu verändern.

Hinsichtlich des Systems ist vorgesehen, dass das System umfasst:
- Eine erfindungsgemäße Vorrichtung;
- Ein Feldgerät der Automatisierungstechnik, wobei das Feldgerät dazu ausgestaltet ist, zumindest eine Prozessvariable eines verfahrenstechnischen Prozesses zu erfassen;
- Eine übergeordnete Einheit; und
- Eine Ethernet-Datenleitung, wobei die Ethernet-Datenleitung aus einem ersten Segment und aus einem zweiten Segment besteht, wobei das erste Segment die Ausgangsschnittstelle der Vorrichtung mit der übergeordneten Einheit verbindet und wobei das zweite Segment das Feldgerät mit der Eingangsschnittstelle der Vorrichtung verbindet, wobei das Feldgerät dazu ausgestaltet ist, Ethernet-Telegramme enthaltend eine Wert der erfassten Prozessvariable zu erstellen und über die Ethernet-Datenleitung an die übergeordnete Einheit zu übermitteln.

Die erfindungsgemäße Vorrichtung wird also in eine Ethernet-Datenleitung zwischen der übergeordneten Einheit und dem Feldgerät eingebaut. Eine solche Ethernet-Datenleitung verbindet ausschließlich ein einzelnes Feldgerät mit der übergeordneten Einheit. Daher muss die Vorrichtung nicht hinsichtlich des Feldgeräts konfiguriert werden, also beispielsweise nicht auf die Netzwerkadresse des Feldgeräts. Es ist vorgesehen, für jede Ethernet-Datenleitung eine separate Vorrichtung zu verwenden.

Gemäß einer ersten vorteilhaften Variante des erfindungsgemäßen Systems ist vorgesehen, dass die übergeordnete Einheit oder ein separates Energiemodul dazu ausgestaltet ist, die Vorrichtung und das Feldgerät über die Ethernet-Datenleitung mit elektrischer Energie zu versorgen.

Gemäß einer vorteilhaften Ausgestaltung der ersten Variante des erfindungsgemäßen Systems ist vorgesehen, dass die Ethernet Datenleitung eine Power over Ethernet-Datenleitung ist, insbesondere eine EtherNet/IP-, PROFINET, Modbus TCP- oder HART-IP-Datenleitung.

Gemäß einer bevorzugten Ausgestaltung der ersten Variante des erfindungsgemäßen Systems ist vorgesehen, dass die übergeordnete Einheit ein Switch oder ein Powerswitch ist.

Gemäß einer zweiten vorteilhaften Variante des erfindungsgemäßen Systems ist vorgesehen, dass das System weiter ein von der Ethernet-Datenleitung unabhängiges Energiemodul umfasst, welches dazu ausgestaltet ist, die Vorrichtung mit elektrischer Energie zu versorgen.

Gemäß einer vorteilhaften Ausgestaltung der zweiten Variante des erfindungsgemäßen Systems ist vorgesehen, dass die übergeordnete Einheit ein Controller ist.

Die Erfindung wird anhand der nachfolgenden Figuren näher erläutert. Es zeigen
Fig. 1: mehrere Ausführungsbeispiele der erfindungsgemäßen Vorrichtung; und
Fig. 2: einen schematischen Aufbau eines Ethernet-Telegramms.

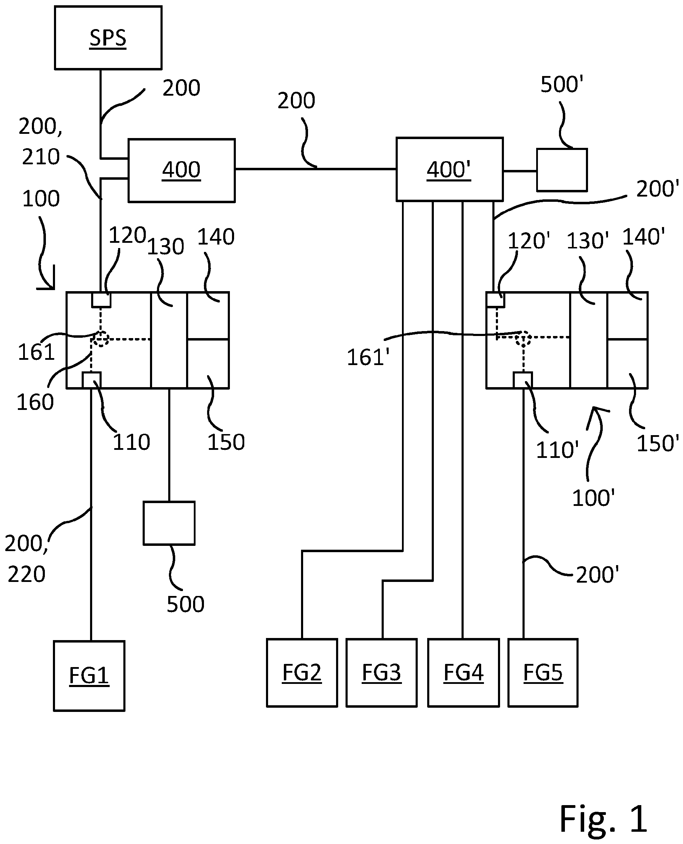

In Fig. 1 ist schematisch ein Netzwerk in einer Anlage der Automatisierungstechnik gezeigt. Das Netzwerk besteht aus einer Steuerungseinheit SPS, aus übergeordneten (Netzwerk)-Einheiten 400, 400', aus Feldgeräten FG1, FG2, FG3, FG4, FG5, sowie einer diese Komponenten SPS, 400, 400' FG1, FG2, FG3, FG4, FG5 verbindenden Ethernet-Datenleitung 200. Die Ethernet-Datenleitung 200 entspricht einem Industrial-Ethernet-Standard, beispielsweise Profinet, Ethernet/IP, Modbus TCP, etc. Eine solche Datenleitung ermöglicht Strecken von bis zu 100 m zwischen den einzelnen Teilnehmern bei Verwendung einer Kupferleitung. Die einzelnen Teilnehmer SPS, 400, FG1 benötigen hierbei eine eigene Stromversorgung.

Die Datenleitung 200 der übergeordneten Einheit 400 zu dem Feldgerät FG1 ist in ein erstes Segment 210 und in ein zweites Segment 220 aufgeteilt. Das erste Segment 210 verbindet die übergeordnete Einheit 400 mit einer erfindungsgemäßen Vorrichtung 100. Das zweite Segment 220 verbindet die erfindungsgemäße Vorrichtung 100 mit dem Feldgerät FG1. Die Vorrichtung weist hierbei eine Eingangsschnittstelle 210 zur Verbindung mit dem zweiten Segment 220 und eine Ausgangsschnittstelle zur Verbindung mit dem ersten Segment 210 auf.

Die Vorrichtung 100 weist eine interne Verbindung 160 zwischen der Eingangsschnittstelle 110 und der Ausgangsschnittstelle 120 auf. Diese ist derart ausgestaltet, dass Telegramme, welche von dem Feldgerät FG1 an die übergeordnete Einheit 400, bzw. vice versa, übermittelt werden, verlustfrei durch die Vorrichtung geleitet werden können. Weder die übergeordnete Einheit 400, noch das Feldgerät FG1 "bemerken" daher, dass sich die Vorrichtung in der die übergeordneten Einheit 400 mit dem Feldgerät FG1 verbindenden Datenleitung 200 befindet.

Über einen Abgriff 161 ist es der Vorrichtung ermöglicht, die zwischen dem Feldgerät FG1 und der übergeordneten Einheit 400 ausgetauschten Telegramme 300 mitzuhören. Hierzu weist die Vorrichtung 100 eine Elektronikeinheit 130, bspw. ein ASIC oder einen Mikroprozessor, auf, die zu diesem Zweck ausgestaltet ist. Die Elektronikeinheit 130 hat einen Algorithmus, bzw. ein Programm implementiert, welches dem Zweck dient, die mitgehörten Telegramme 300 zu analysieren und den Nutzdatenanteil 310 aus den Telegrammen zu extrahieren.

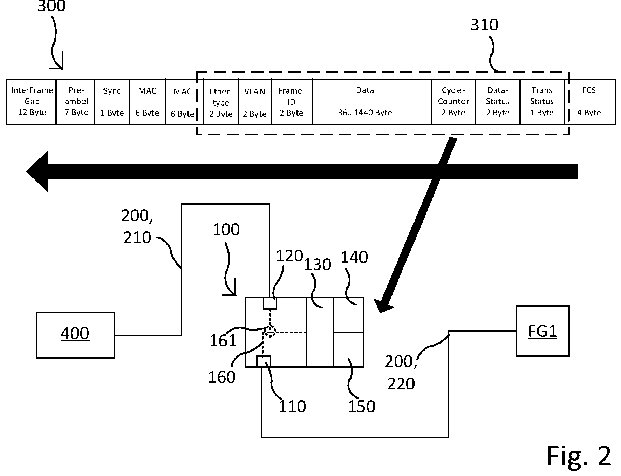

Ein typischer Telegrammaufbau eines Ethernet-Telegramms 300 ist in Fig. 2 gezeigt. Nach einem einleitenden Telegrammteil beginnt der Nutzdatenanteil 310. Die Elektronikeinheit 130 ist insbesondere dazu ausgelegt, den Datenteil "Data" des Nutzdatenanteils 130 zu erkennen. Dieser enthält insbesondere die von dem Feldgerät FG1 erfassten Werte der Prozessvariablen, Messwertstatus und/oder Diagnoseinformationen. Jedoch ist dieser Datenteil abhängig von dem Typ und/oder dem Hersteller eines Feldgeräts und schwankt insbesondere in der Datengröße und/oder im Aufbau, insbesondere auch abhängig bspw. von dem Typ einer erfassten Prozessvariablen.

Die Elektronikeinheit 130 ist daher mittels des implementierten Programms, bzw. des Algorithmus dazu ausgestaltet, die Struktur des Datenteils und die aus diesem zu extrahierenden Daten aufgrund Gemeinsamkeiten des Nutzdatenanteils der Ethernet-Telegramme 300 mit in einer Speichereinheit 150 der Vorrichtung gespeicherten Informationen zur Interpretation der Nutzdatenanteile zu ermitteln. Durch das Vorhalten der Gerätebeschreibungen verschiedener Geräte in der Speichereinheit 150 ist es der Vorrichtung ermöglicht, selbstständig zu ermitteln, in welcher Form der Nutzdatenanteil in dem Telegramm 300 vorliegt und wie dieser interpretiert werden kann. Es kann hierbei in der einfachsten Form vorgesehen sein, dass die Elektronikeinheit der Vorrichtung den Nutzdatenanteil des Ethernet-Telegramms 300 tabellarisch mit den Einträgen in der Speichereinheit 150 vergleicht und dadurch Informationen zur Interpretation des Nutzdatenanteils erhält. Eine komplexere Alternative sieht vor, dass die Elektronikeinheit 130 einen KI ("Künstliche Intelligenz")-Algorithmus verwendet, welcher Gemeinsamkeiten des Nutzdatenanteils der Ethernet-Telegramme mit in der Speichereinheit 150 gespeicherten Informationen ermittelt, wodurch dadurch Informationen zur Interpretation des Nutzdatenanteils gewonnen werden.

Der ausgelesene und interpretierte Nutzdatenanteil wird anschließend mittels einer Ausgabeeinheit 140 der Vorrichtung 100 ausgegeben, bzw. widergegeben. Im einfachsten Fall ist die Ausgabeeinheit 140 eine Anzeigeeinheit, insbesondere ein Display, welches dazu ausgestaltet ist, den interpretierten Nutzdatenanteil, insbesondere den Wert der Prozessvariablen, anzuzeigen. Beispielsweise wird ein 7-Segment-Display verwendet.

Alternativ ist die Ausgabeeinheit 140 eine weitere Schnittstelle, insbesondere eine Funkschnittstelle, über welche die Prozessvariable in einem zu dem verwendeten Ethernet-Protokoll verschiedenen Protokoll, beispielsweise Bluetooth oder WiFi, abrufbar ist, insbesondere von einer Bedieneinheit.

Ein Abschnitt der Ethernet-Datenleitung (dieser Abschnitt ist mit 200' bezeichnet) nutzt einen zu der Ethernet-Datenleitung 200 verschiedenen Ethernet-Standard, beispielsweise einen IEEE802.3 (10 BASE-TIL)/ IEC 60079 (voraussichtlich Ende 2019 fertig spezifiziert)-konformen Standard. Hierbei ist eine Energieversorgung der Feldgeräte über die Ethernet-Datenleitung (Power-over-Ethernet) möglich. Konkret sind die von der übergeordneten Einheit 400' abgehenden Datenleitungen 200' dazu ausgestaltet, elektrische Energie zu den Teilnehmern FG2, FG3, FG4, FG5, 100' zu befördern. Zu diesem Zweck ist die übergeordnete Einheit 400' mit einem externen Energiemodul 500' verbunden. Das externe Energiemodul versorgt sowohl die übergeordnete Einheit 400' direkt, als auch die Teilnehmer FG2, FG3, FG4, FG5, 100' über die Datenleitungen 200' mit ihrer zum Betrieb benötigten elektrischen Energie.

### Bezugszeichenliste

- 100: Vorrichtung
- 110: Eingangsschnittstelle
- 120: Ausgangsschnittstelle
- 130: Elektronikeinheit
- 140: Ausgabeeinheit
- 150: Speichereinheit
- 160: interne Verbindung
- 161: Abgriff
- 200: Ethernet-Datenleitung
- 210: erstes Segment
- 220: zweites Segment
- 300: Ethernet-Telegramme
- 310: Nutzdatenanteil
- 400: übergeordnete Einheit
- 500, 500': Energiemodul
- FG1, FG2, FG3, FG4, FG5: Feldgeräte
- SPS: Steuerungseinheit

## Patentansprüche

1. Vorrichtung (100) zur Extraktion von Nutzdaten aus von einem Feldgerät (FG1, FG5) ausgesendeten Ethernet-Telegrammen, umfassend:
- Eine Eingangsschnittstelle (110) und eine Ausgangschnittstelle (120) zum Anschluss an eine Ethernet-Datenleitung (200), wobei die Eingangsschnittstelle (110) ausgestaltet ist, über die Ethernet-Datenleitung (200) übermittelte Ethernet-Telegramme (300) zu empfangen;
- Eine Elektronikeinheit (130), welche dazu ausgestaltet ist, die empfangenen Ethernet-Telegramme (300) auszuwerten und einen Wert zumindest einer Prozessvariable aus den Nutzdatenanteilen (310) der empfangenen Ethernet-Telegramme (300) zu extrahieren;
- eine Speichereinheit (150), wobei die Speichereinheit (150) eine Datenbank mit Gerätebeschreibungsdaten einer Vielzahl von Feldgerätetypen umfasst, wobei die Gerätebeschreibungsdaten Informationen zur Interpretation der Nutzdatenanteile (310) der Feldgeräte (FG1, FG5) umfassen, insbesondere den Datentyp und/oder die Nutzdatenlänge,
wobei die Elektronikeinheit (130) dazu ausgestaltet ist, die Struktur der zu ermittelnden Prozessvariablen aufgrund Gemeinsamkeiten des Nutzdatenanteils (310) der Ethernet-Telegramme (300) mit in Datenbank gespeicherten Informationen zur Interpretation der Nutzdatenanteile (310) zu ermitteln; und
- Eine Ausgabeeinheit (140) zum Ausgeben der ermittelten Prozessvariablen.

2. Vorrichtung (100) nach Anspruch 1, wobei die Ausgabeeinheit (140) eine Anzeigeeinheit ist, insbesondere ein Display, welches dazu ausgestaltet ist, die ermittelten Prozessvariablen anzuzeigen.

3. Vorrichtung (100) nach Anspruch 1 oder 2, wobei die Vorrichtung (100) eine interne Verbindung (160) der Eingangsschnittstelle (110) mit der Ausgangsschnittstelle (120) aufweist, wobei die interne Verbindung (160) ausgestaltet ist, die an der Eingangsschnittstelle (110) eingehenden Ethernet-Telegramme (300) verlustfrei an die Ausgangsschnittstelle (120) weiterzuleiten.

4. Vorrichtung (100) nach Anspruch 3, wobei die interne Verbindung (160) einen mit der Elektronikeinheit (130) verbundenen Abgriff (161) aufweist.

5. System, umfassend:
- Eine Vorrichtung (100) nach zumindest einem der Ansprüche 1 bis 6;
- Ein Feldgerät (FG1, FG5) der Automatisierungstechnik, wobei das Feldgerät (FG1, FG5) dazu ausgestaltet ist, zumindest eine Prozessvariable eines verfahrenstechnischen Prozesses zu erfassen;
- Eine übergeordnete Einheit (400); und
- Eine Ethernet-Datenleitung (200), wobei die Ethernet-Datenleitung (200) ein erstes Segment (210) und ein zweites Segment (220) umfasst, wobei das erste Segment (210) die Ausgangsschnittstelle (120) der Vorrichtung (100) mit der übergeordneten Einheit (400) verbindet und wobei das zweite Segment (220)das Feldgerät (FG1, FG5) mit der Eingangsschnittstelle (110) der Vorrichtung (100) verbindet, wobei das Feldgerät (FG1, FG5) dazu ausgestaltet ist, Ethernet-Telegramme (300) enthaltend eine Wert der erfassten Prozessvariable zu erstellen und über die Ethernet-Datenleitung (200) an die übergeordnete Einheit (400) zu übermitteln.

6. System nach Anspruch 5, wobei die übergeordnete Einheit (400) oder ein separates Energiemodul (500) dazu ausgestaltet ist, die Vorrichtung (100) und das Feldgerät (FG1, FG5) über die Ethernet-Datenleitung (200) mit elektrischer Energie zu versorgen.

7. System nach Anspruch 6 wobei die Ethernet Datenleitung (200) eine Power over Ethernet-Datenleitung ist, insbesondere eine EtherNet/IP-, PROFINET, Modbus TCP- oder HART-IP-Datenleitung.

8. System nach einem der Ansprüche 6 oder 7, wobei die übergeordnete Einheit (400) ein Switch oder ein Powerswitch ist.

9. System nach Anspruch 5, umfassend ein von der Ethernet-Datenleitung (200) unabhängiges Energiemodul (500'), welches dazu ausgestaltet ist, die Vorrichtung (100) mit elektrischer Energie zu versorgen.

10. System nach Anspruch 9, wobei die übergeordnete Einheit (400) ein Controller ist.

## Claims

1. A device (100) for extracting useful data from Ethernet telegrams transmitted by a field device (FG1, FG5), comprising:
- an input interface (110) and an output interface (120) for connection to an Ethernet data line (200), the input interface (110) being designed to receive Ethernet telegrams (300) transmitted via the Ethernet data line (200);
- an electronic unit (130) configured to evaluate the received Ethernet telegrams (300) and to extract a value of at least one process variable from the payload portions (310) of the received Ethernet telegrams (300);
- a memory unit (150), the memory unit (150) comprising a database with device description data of a multiplicity of field device types, the device description data comprising information for interpreting the user data portions (310) of the field devices (FG1, FG5), in particular the data type and/or the user data length,
wherein the electronic unit (130) is configured to determine the structure of the process variables to be determined on the basis of similarities of the user data portion (310) of the Ethernet telegrams (300) with information stored in the database for interpreting the user data portions (310); and
- an output unit (140) for outputting the determined process variables.

2. A device (100) according to claim 1, wherein the output unit (140) is a display unit, in particular a display, which is configured to display the determined process variables.

3. device (100) according to claim 1 or 2, wherein the device (100) has an internal connection (160) of the input interface (110) to the output interface (120) wherein the internal connection (160) is configured to forward the Ethernet telegrams (300) incoming at the input interface (110) to the output interface (120) without loss.

4. A device (100) according to claim 3, wherein the internal connection (160) has a tap (161) connected to the electronic unit (130).

5. A system comprising:
- a device (100) according to at least one of claims 1 to 6;
- a field device (FG1, FG5) of automation technology, the field device (FG1, FG5) being configured to detect at least one process variable of a process engineering process;
- a higher-level unit (400); and
- an Ethernet data line (200), wherein the Ethernet data line (200) comprises a first segment (210) and a second segment (220), wherein the first segment (210) connects the output interface (120) of the device (100) to the higher-level unit (400) and wherein the second segment (220) connects the field device (FG1, FG5) to the input interface (110) of the device (100), wherein the field device (FG1, FG5) is configured to create Ethernet telegrams (300) containing a value of the detected process variable and to transmit the same to the higher-level unit (400) via the Ethernet data line (200).

6. System according to claim 5, wherein the higher-level unit (400) or a separate power module (500) is configured to supply the device (100) and the field device (FG1, FG5) with electrical energy via the Ethernet data line (200).

7. System according to claim 6, wherein the Ethernet data line (200) is a Power over Ethernet data line, in particular an EtherNet/IP, PROFINET, Modbus TCP or HART-IP data line.

8. System according to one of claims 6 or 7, wherein the higher-level unit (400) is a switch or a power switch.

9. System according to claim 5, comprising a power module (500') independent of the Ethernet data line (200), which is configured to supply the device (100) with electrical energy.

10. System according to claim 9, wherein the higher-level unit (400) is a controller.

## Revendications

1. Dispositif (100) d'extraction de données utiles à partir de télégrammes Ethernet émis par un appareil de terrain (FG1, FG5), comprenant :
- Une interface d'entrée (110) et une interface de sortie (120) pour le raccordement à une ligne de données Ethernet (200), l'interface d'entrée (110) étant conçue pour recevoir des télégrammes Ethernet (300) transmis par la ligne de données Ethernet (200) ;
- une unité électronique (130) qui est conçue pour évaluer les télégrammes Ethernet (300) reçus et pour extraire une valeur d'au moins une variable de processus des parties de données utiles (310) des télégrammes Ethernet (300) reçus ;
- une unité de mémoire (150), l'unité de mémoire (150) comprenant une base de données avec des données de description d'appareils d'une pluralité de types d'appareils de terrain, les données de description d'appareils comprenant des informations pour l'interprétation des parties de données utiles (310) des appareils de terrain (FG1, FG5), notamment le type de données et/ou la longueur de données utiles,
l'unité électronique (130) étant conçue pour déterminer la structure des variables de processus à déterminer sur la base des points communs de la partie de données utiles (310) des télégrammes Ethernet (300) avec des informations mémorisées dans la base de données pour l'interprétation des parties de données utiles (310) ; et
- une unité de sortie (140) pour émettre les variables de processus déterminées.

2. Dispositif (100) selon la revendication 1, dans lequel l'unité de sortie (140) est une unité d'affichage, en particulier un écran, qui est configuré pour afficher les variables de processus déterminées.

3. Dispositif (100) selon la revendication 1 ou 2, dans lequel le dispositif (100) présente une liaison interne (160) de l'interface d'entrée (110) avec l'interface de sortie (120), la liaison interne (160) étant configurée pour retransmettre sans perte les télégrammes Ethernet (300) arrivant sur l'interface d'entrée (110) à l'interface de sortie (120).

4. Dispositif (100) selon la revendication 3, dans lequel la liaison interne (160) comporte une prise (161) reliée à l'unité électronique (130).

5. Système comprenant :
- Un dispositif (100) selon au moins l'une des revendications 1 à 6 ;
- Un appareil de terrain (FG1, FG5) de la technique d'automatisation, l'appareil de terrain (FG1, FG5) étant configuré pour détecter au moins une variable de processus d'un processus technique de procédé ;
- une unité supérieure (400) ; et
- une ligne de données Ethernet (200), la ligne de données Ethernet (200) comprenant un premier segment (210) et un deuxième segment (220), le premier segment (210) reliant l'interface de sortie (120) du dispositif (100) à l'unité supérieure (400), et le deuxième segment (220) reliant l'appareil de terrain (FG1, FG5) à l'interface d'entrée (110) du dispositif (100), l'appareil de terrain (FG1, FG5) étant configuré pour établir des télégrammes Ethernet (300) contenant une valeur de la variable de processus détectée et pour les transmettre à l'unité supérieure (400) via la ligne de données Ethernet (200).

6. Système selon la revendication 5, dans lequel l'unité supérieure (400) ou un module d'énergie séparé (500) est configuré pour alimenter le dispositif (100) et l'appareil de terrain (FG1, FG5) en énergie électrique via la ligne de données Ethernet (200).

7. Système selon la revendication 6, dans lequel la ligne de données Ethernet (200) est une ligne de données Power over Ethernet, notamment une ligne de données EtherNet/IP, PROFINET, Modbus TCP ou HART-IP.

8. Système selon l'une des revendications 6 ou 7, dans lequel l'unité de niveau supérieur (400) est un commutateur ou un Powerswitch.

9. Système selon la revendication 5, comprenant un module d'énergie (500') indépendant de la ligne de données Ethernet (200) et configuré pour alimenter le dispositif (100) en énergie électrique.

10. Système selon la revendication 9, dans lequel l'unité supérieure (400) est un contrôleur.
